# EUROPÄISCHE PATENTSCHRIFT

(11) **EP 1 975 601 B1**
(45) Veröffentlichungstag und Bekanntmachung des Hinweises auf die Patenterteilung: **12.01.2011**
(21) Anmeldenummer: 07006119.7
(22) Anmeldetag: 24.03.2007
(51) Int. Cl.: G01N 21/27, G01N 21/53

(54) **Verschmutzungsmessung**
Contamination measurements
Mesure de la saleté

(43) Veröffentlichungstag der Anmeldung: 01.10.2008
(73) Patentinhaber: SICK Engineering GmbH, 01458 Ottendorf-Okrilla (DE)
(72) Erfinder: Oehmichen, Lars, 01217 Dresden (DE)
(74) Vertreter: Ludewigt, Christoph

(56) Entgegenhaltungen:
- EP-A- 1 729 108
- DE-A1- 1 623 071
- US-A- 3 885 162
- US-A- 4 126 396
- US-A- 5 028 790

## Beschreibung

Die Erfindung betrifft eine optische Vorrichtung zur Staubmessung nach dem Oberbegriff des Anspruchs 1. Des Weiteren ist ein Verfahren zum Betrieb einer optischen Vorrichtung zur Staubmessung aufgezeigt.

Optische Vorrichtungen zur Staubmessung werden eingesetzt, um die Konzentration von Partikeln (Aerosolen, Staubteilchen, usw.) in Abluftkanälen bzw. in der Atmosphäre festzustellen. Dadurch ist es möglich, zum Beispiel den Rußpartikelausstoß in einem Kamin zu ermitteln. Weiterhin werden optische Vorrichtungen zur Staubmessung im Straßenverkehr, in der Schifffahrt oder der Luftfahrt eingesetzt, um gegebenenfalls ein Warnsignal beim Unterschreiten einer definierten Sichtweite auszugeben.

Die optischen Vorrichtungen zur Staubmessung arbeiten dabei entweder nach dem Transmissionsprinzip oder nach dem Streulichtprinzip.

Bei der Staubmessung nach dem Transmissionsprinzip sendet ein Lichtsender ein definiertes Lichtbündel in einen Messbereich aus. Am gegenüberliegenden Ende des Messbereiches ist ein Reflektor angeordnet, der das Lichtbündel erneut durch den Messbereich zu seinem Ausgangsort zurückwirft. In unmittelbarer Nähe des Lichtsenders ist eine Lichtempfangseinheit angeordnet, mit der die ankommende Lichtmenge erfasst wird. Befinden sich keine Partikel in dem Messbereich, wird die von der Lichtempfangseinheit erfasste Lichtmenge einem Transmissionswert von 100 % zugeordnet. Aus dem mathematischen Zusammenhang zwischen der Länge des Lichtzeges und dem in der Lichtempfangseinheit gemessenen Transmissionswert kann somit die Staubmenge pro Wegstrecke ermittelt werden.

Die optischen Vorrichtungen zur Staubmessung, die nach dem Prinzip der Streulichtmessung arbeiten, verwenden ebenfalls einen Lichtsender und eine Lichtempfangseinheit, die in einem gemeinsamen Gehäuse angebracht sind. Durch mindestens ein Lichtaustritts- und Lichteintrittsfenster gelangt dabei das ausgesandte Lichtbündel in den Staubbereich, beziehungsweise kann Licht, das aus dem Staubbereich kommt, zur Lichtempfangseinheit gelangen. Der Lichtsender und die Lichtempfangseinheit sind in dem gemeinsamen Gehäuse so angebracht, dass sich das vom Lichtsender ausgesandte Lichtbündel und das von der Lichtempfangseinheit aufgenommene Lichtbündel innerhalb des Staubbereiches überschneidet. Dadurch wird bei der Streulichtmessung nur dann Licht zur Lichtempfangseinheit gelangen, wenn zumindest Teile des ausgesandten Lichtbündels an einem Partikel innerhalb des Messbereiches zurück gestreut werden. Bei diesem Prinzip der rückwärtsgestreuten Messung (Backscatter-Prinzip) gelangt somit eine der Partikel häufigkeit proportionale Lichtmenge zur Lichtempfangseinheit, so dass damit die Messung der Staubkonzentration möglich ist.

Ein großes Problem optischer Vorrichtungen zur Staubmessung besteht darin, dass diese Vorrichtung mit der staubbelasteten Umgebung meist in direktem Kontakt steht. Aus diesem Grunde haben die dem Staubbereich zugewandten Oberflächen der Lichtaustritts- und Lichteintrittsfenster die Eigenschaft einer optischen Grenzfläche. Auf diesen optischen Grenzflächen, mit denen die Vorrichtung gegenüber der staubbelasteten Umgebung abgegrenzt ist, kann es demzufolge im praktischen Einsatz zu Ablagerungen von Staub kommen. Damit diese Staubablagerungen dann nicht zu einem fehlerhaften Messergebnis führen, ist es notwendig, den Einfluss der Verschmutzung zu erfassen und aus dem Messergebnis heraus zu rechnen. Insbesondere bei optischen Vorrichtungen, die nach dem Streulichtprinzip arbeiten, ist dies besonders kritisch, weil die auszuwertenden Lichtmengen oft sehr klein sind, so dass schon geringfügige Staubablagerungen zu einem großen Messfehler führen können.

Aus diesem Grunde ist es nach dem Stand der Technik bekannt, mit einer zugeführten, externen Luftströmung vor den optischen Grenzflächen einen Luftüberdruck zu erzeugen, um dadurch zu verhindern, dass sich auf den optischen Grenzflächen Umgebungsstaub ablagern kann (DE 1 993 225). Dies stellt jedoch einen hohen Aufwand an Herstellungs- und Betriebskosten dar und kann darüber hinaus, zum Beispiel bei einem kurzfristigen Anstieg des Umgebungsdrucks, nicht sicher verhindern, dass Staub auf die Grenzflächen gelangen kann. Langfristig wird immer Staub an die die optischen Grenzflächen bildenden Fenster gelangen und sich dort ablagern.

Um diesen Messfehler zu vermeiden, ist es nach der DE 29 31 266 C2 bekannt, die optischen Grenzflächen mit einer Reinigungsvorrichtung zu versehen. Der damit verbundene konstruktive Aufwand ist jedoch sehr hoch. Darüber hinaus ist dafür ein großer Platzbedarf erforderlich, der in vielen Anwendungsfällen nicht vorhanden ist.

Aus US 4,126,396, US 5,028,790, US 3,885,162 und DE 1 623 071 sind weitere gattungsgemäße Vorrichtungen bekannt, bei denen zu Kalibrierzwecken ein Reflektor in den Strahlengang geschwenkt werden kann, um das Sendelicht direkt dem Lichtempfänger zur Kalibirerung zuzuführen.

Der Erfindung liegt deshalb die Aufgabe zugrunde, eine optische Vorrichtung zur Staubmessung und ein Verfahren zum Betrieb derselben zu schaffen, mit der die Verschmutzung der optischen Grenzflächen zuverlässig gemessen werden kann, um deren Einfluss aus dem ermittelten Messergebnis zu eliminieren. Insbesondere soll dabei eine einfache konstruktive Ausführungsform zur Anwendung kommen, die über einen langen Zeitraum stabile Ergebnisse liefert und in einer kompakten Bauweise dargestellt werden kann.

Diese Aufgabe wird gelöst durch eine optische Vorrichtung mit den Merkmalen des Anspruchs 1 sowie ein Verfahren mit den Merkmalen des Anspruchs 9.

Danach sieht die Erfindung vor, dass an der mit den Lichtaustritts- und Lichteintrittsfenstern ausgestatteten Außenseite des Gehäuses der Vorrichtung eine Schiebemechanikeinheit angeordnet ist, die von einer Steuer- und Auswerteeinheit in vorgegebenen zeitlichen Abständen kurzzeitig aktiviert wird. Die Schiebemechanikeinheit ist erfindungsgemäß zweistufig aufgebaut, wobei mit der in der ersten Stufe eine auf einer Optikträgerplatte angeordnete Optikeinheit aus einer Parkposition abgehoben und in einer zweiten Stufe vor den wirksamen optischen

Querschnitt der Lichtaustritts- und Lichteintrittsfenster bewegt wird. Durch das Abheben der Optikeinheit aus der Parkposition in der ersten Bewegungsstufe werden optische Grenzflächen geschont und können nicht verkratzen. In der zweiten Bewegungsstufe wird durch einfaches Verschieben die Optikeinheit in die gewünschte Position zur Umlenkung des Lichtes gebracht. Dabei sind in der Optikeinheit mehrere optische Komponenten vorhanden, die dann, wenn die Optikeinheit vor das aus dem Gehäuse austretende Lichtbündel gebracht ist, dieses wieder unmittelbar der Lichtempfangseinheit zuführt. In dieser Position kann dann der Umfang der Verschmutzung der Lichtaustritts- und Lichteintrittsfenster von der Auswerteeinheit anhand des lediglich durch das Lichtaustritts- und Lichteintrittsfenster abgeschwächten Lichtstrahls erfasst werden, so dass dieser Einfluss mit Hilfe der Auswerteeinheit bei der eigentlichen Staubmessung eliminiert werden kann. Analog dazu werden mit der gleichen zweistufigen Schiebemechanik wieder beide Bewegungsstufen in umgekehrter Reihenfolge zurückgeführt.

Es ist sinnvoll, diese Verschmutzungsmessung in vorgegebenen zeitlichen Abständen durchzuführen, wozu in einer vorteilhaften Ausführungsform die Steuer- und Auswerteeinheit kurzzeitig aktivierbar ist.

Eine besonders vorteilhafte Ausführungsform der Erfindung ist durch den Anspruch 3. gekennzeichnet. Dabei besteht der wesentliche Vorteil darin, dass mit der erfindungsgemäßen konstruktiven Ausgestaltung der Schiebemechanikeinheit nur wenig mechanisch bewegte Teile vorhanden sind. Damit ist eine kleine, kompakte Bauweise möglich, die auch bei beengten Einbauverhältnissen anwendbar ist.

Ein wesentlicher Vorteil der Erfindung ist darin zu sehen, dass zur Durchführung aller mechanischen Bewegungen in der Messeinheit nur ein gleichförmig rechtsbeziehungsweise linksdrehender Motor vorhanden ist. Dies ist besonders deshalb von Vorteil, weil nach dem einmaligen Einschalten des Motors zwei getrennte, zeitlich nacheinander ablaufende Bewegungsstufen ausgeführt werden, was sich insbesondere auf die Baugröße, die Zuverlässigkeit und die Herstellungskosten der Messeinheit positiv auswirkt. Durch die vorteilhafte Ankoppelung des Motors mittels einer angetriebenen. Gewindespindel, die in eine an einer Schieberplatte angebrachte Spindelmutter eingreift, kann aufgrund der hohen mechanischen Untersetzung ein relativ kleiner, leistungsschwacher und demzufolge preiswerter Motor verwendet werden.

Zum Schutz vor Verunreinigungen an den optischen Öffnungen der Optikeinheit werden diese in der Parkposition mit einer Federkraft gegen eine auf der Montagefläche angebrachte Dichtfläche gedrückt. Damit wird verhindert, dass während des Staubmessbetriebs der Vorrichtung kein Schmutz in die Optikeinheit gelangen kann. In vorteilhafter Weise wird dadurch eine hohe Genauigkeit der Verschmutzungsmessung über einen langen Zeitraum erreicht.

In einer bevorzugten praktischen Ausführungsform der Erfindung wird in der Optikeinheit zur Lichtumlenkung ein flexibler Lichtleiter eingesetzt. Dies hat den Vorteil, dass dadurch die Lichtumlenkung sehr variabel in die mechanischen Komponenten innerhalb der Optikeinheit integriert werden kann, so dass dafür wenig Platz benötigt wird.

Besonders vorteilhaft ist der Lichtleitereinsatz zur Lichtumlenkung in der Optikeinheit dann, wenn in der Vorrichtung zur Staubmessung zwei Lichtempfangseinheiten vorhanden sind. In diesem Fall kann zum Beispiel ein Y-förmiger Lichtleiter eingesetzt werden, bei dem das gemeinsame Ende des Lichtleiters auf das aus dem Gerät austretende Lichtbündel gerichtet ist und die beiden Einzelarme des Lichtleiters zu den Lichtempfangseinheiten hin gerichtet sind. Dadurch ist es nach der Erfindung ohne wesentlichen Zusatzaufwand möglich, gleichzeitig die Verschmutzung aller optischen Grenzflächen zu ermitteln. Alternativ könnten auch zwei einzelne Lichtleiter eingesetzt werden, wobei erste Enden der Lichtleiter auf einen vom austretenden Lichtbündel beleuchteten Fleck gerichtet sind und die beiden anderen Enden der Lichtleiter zu den Lichtempfangseinheiten hin.

Nach einer bevorzugten Ausführungsform der erfindungsgemäßen Vorrichtung ist es vorgesehen, dass als Basis der gesamten Schiebemechanikeinheit eine Montageplatte vorhanden ist. Diese Montageplatte ist mit dem Gehäuse lösbar verbunden. Damit wird in vorteilhafter Weise erreicht, dass im Falle eines Defektes in der Schiebemechanikeinheit, die gesamte Schiebemechanikeinheit ohne aufwendige Justage- oder Abgleichmaßnahmen schnell gegen eine neue Schiebemechanikeinheit ausgetauscht werden kann.

Im Folgenden wird die Erfindung anhand eines Ausführungsbeispiels unter Bezugnahme auf die Zeichnung im Einzelnen erläutert. In der Zeichnung zeigt:
- Fig. 1: eine schematische Schnittdarstellung einer erfindungsgemäßen Vorrichtung, bei der sich eine zur Verschmutzungsmessung vorgesehene Optikeinheit in einer Parkposition befindet;
- Fig. 2: eine schematische Schnittdarstellung einer erfindungsgemäßen Vorrichtung, bei der die zur Verschmutzungsmessung vorgesehene Optikeinheit aus der Parkposition abgehoben ist;
- Fig. 3: eine schematische Schnittdarstellung einer erfindungsgemäßen Vorrichtung, bei der die zur Verschmutzungsmessung vorgesehene Optikeinheit in den Strahlengang eingefahren ist.

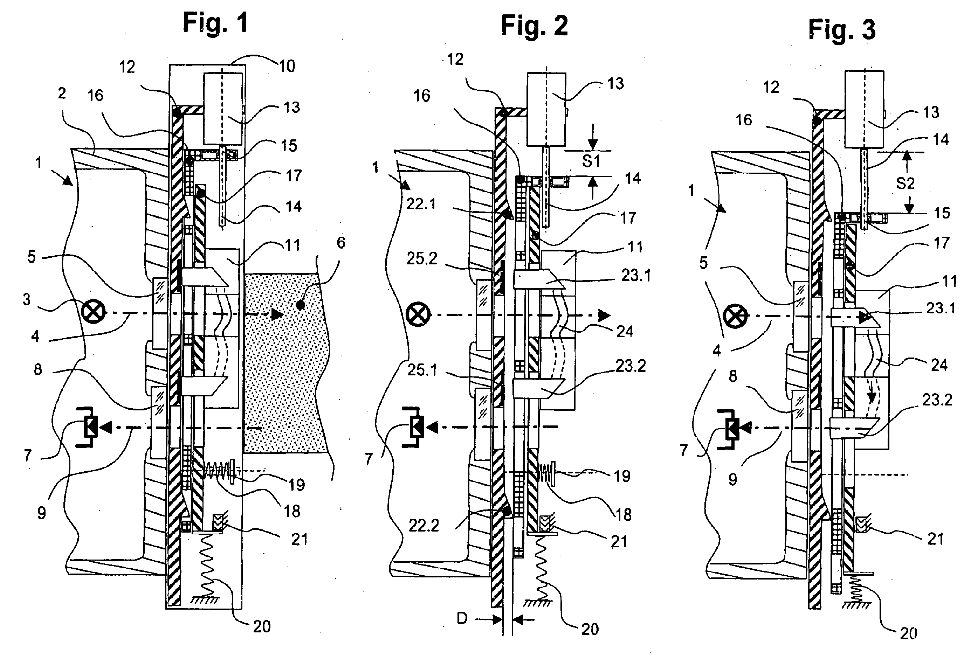

In Figur 1 ist eine Vorrichtung 1 zur Staubmessung ausschnittsweise gezeigt. Dabei ist in einem Gehäuse 2 ein Lichtsender 3 symbolisch dargestellt, der ein Lichtbündel 4 durch ein im Gehäuse 2 eingesetztes Lichtaustrittsfenster 5 in einen Staubbereich 6 aussendet. Weiterhin ist im Gehäuse 2 eine Lichtempfangseinheit 7 angeordnet, die mit einem ebenfalls im Gehäuse 2 eingesetzten Lichteintrittsfenster 8 gegen den Staubbereich 6 abgegrenzt ist. Durch dieses Lichteintrittsfenster 8 hindurch kann die Lichtempfangseinheit 7 einen aus dem Staubbereich 6 kommenden Empfangslichtstrahl 9 erfassen.

An der Außenseite des Gehäuses 2 ist vor dem Lichtaustrittsfenster 5 und dem Lichteintrittsfenster 8 eine Schiebemechanikeinheit 10 angebracht. In der Schiebemechanikeinheit 10 ist eine ortsveränderliche Optikeinheit 11 enthalten. Nach der in Figur 1 dargestellten Anordnung, bei der sich die Vorrichtung 1 im Zustand der Staubmessung befindet, ist die Optikeinheit 11 in einer Parkposition gelagert. In dieser Parkposition beeinträchtigt die Optikeinheit 11 den Lichtweg des ausgesandten Lichtbündels 4 und den Lichtweg des Empfangslichtstrahls 9 nicht.

Die Schiebemechanikeinheit 10 besitzt eine Montageplatte 12, die über mehrere, in Figur 1 nicht einzeln dargestellte Verbindungselemente mit dem Gehäuse 2 lösbar verbunden ist. Auf der Montageplatte 12 ist ein Motor 13 befestigt, der eine Gewindespindel 14 antreibt. Die Gewindespindel 14 wird von einer in einer Schieberplatte 16 eingefügten Spindelmutter 15 umschlossen. Parallel neben der Montageplatte 12 und der Schieberplatte 16 ist eine Optikträgerplatte 17 angeordnet. Sowohl die Optikträgerplatte 17 als auch die Schieberplatte 16 sind durch mehrere Verbindungselemente mit der Montageplatte 12 verbunden. In Figur 1 ist eines dieser Verbindungselemente dargestellt. Dabei ist zu erkennen, wie mit Hilfe von einem mit einer Druckfeder 18 umschlossenen Stempel 19 sowohl die Optikträgerplatte 17 als auch die Schieberplatte 16 gegen die Montageplatte 12 gespannt wird. In der Optikträgerplatte 17 und der Schieberplatte 16 sind deshalb entsprechende Durchbrüche für die Stempel 19 vorgesehen. Diese Durchbrüche, die Stempel 19 und Druckfedern 18, sind so demissioniert, dass sowohl die Optikträgerplatte 17 als auch die Schieberplatte 16 parallel zur Montageplatte 12 innerhalb eines begrenzten Bereichs verschoben werden können. Diese mechanische Koppelung der beiden Platten mit der Montageplatte 12 macht es möglich, dass durch eine Drehbewegung des Motors 13 eine Schubkraft mittels der Gewindespindel 14 über die Spindelmutter 15 auf die Schieberplatte 16 übertragen werden kann. Während die Schieberplatte 16 wie zuvor beschrieben über die Gewindespindel 14 und die Spindelmutter 15 mit dem Motor 13 mechanisch verbunden ist, wird, wie weiterhin aus Figur 1 zu entnehmen ist, die Optikträgerplatte 17 mittels einer Feder 20 gegen einen mechanischen Anschlag 21 gedrückt.

Bei der Zeichnung in Figur 2 ist die Schieberplatte 16 aufgrund mehrerer von der Gewindespindel 14 durchgeführten Umdrehungen gegenüber der Darstellung in Figur 1 um eine Wegstrecke S1 parallel zur Montageplatte 12 verschoben. Bei dieser Verschiebung kommen mehrere auf der Montageplatte 12 angeordnete keilförmig ansteigende Distanzelemente 22.1 und 22.2 mit der Schieberplatte 16 in direkten Kontakt. Diese keilförmig ansteigenden Distanzelemente 22.1 und 22.2, die sich zuvor in einer Aussparung der Schieberplatte 16 befunden haben, könnten auch auf der Schieberplatte 16 angebracht sein und bei der in Figur 1 dargestellten Position der Schieberplatte 16 in eine entsprechende Aussparung, die dann innerhalb der Montageplatte 12 angeordnet wäre, eingreifen. Mit dem Einfluss dieser Distanzelemente 22.1 und 22.2 wird erreicht, dass sich die Schieberplatte 16 bei der Lageveränderung um die Wegstrecke S1 gleichzeitig um einen Distanzbetrag D von der Montageplatte 12 entfernt.

Da die Optikträgerplatte 17 durch die mit der Druckfeder 18 umschlossenen Stempel 19 gegen die Schieberplatte 16 gespannt ist, wird sich folglich auch die Optikträgerplatte 17 um den Distanzbetrag D von der Montageplatte 12 entfernen. Eine Verschiebung der Optikträgerplatte 17 in Richtung der Wegstrecke S1 findet jedoch nicht statt, da die Optikträgerplatte 17 weiterhin mittels der Feder 20 gegen den mechanischen Anschlag 21 gedrückt wird. Durch die um den Distanzbetrag D zugenommene Vergrößerung des Abstandes der Optikträgerplatte 17 von der Montageplatte 12 hat sich auch die auf der Montageplatte 12 aufgebrachte Optikeinheit 11 rechtwinklig von der Montageplatte 12 entfernt, das heißt ist lediglich von der Montageplatte 12 abgehoben worden und dabei nicht parallel verschoben worden.

In der Optikeinheit 11 sind wenigstens zwei optische Umlenkeinheiten 23.1 und 23.2 angeordnet, mit deren Hilfe ein einfallender Lichtstrahl um jeweils einen Winkel von 90° umgelenkt wird. Zu diesem Zweck ist in den Umlenkeinheiten 23.1 und 23.2 beispielsweise ein einfacher, unter 45° zum einfallenden Licht ausgerichteter Umlenkspiegel eingesetzt. Es ist jedoch genauso möglich, dafür ein Prisma oder eine andere optische Einheit zu verwenden. Zwischen den beiden Umlenkeinheiten 23.1 und 23.2 ist ein flexibler Lichtleiter 24 angeordnet, mit dem ein Lichtstrahl zwischen den Umlenkeinheiten 23.1 und 23.2 geführt werden kann. Der flexible Lichtleiter 24 ist dabei so geführt, dass der Lichtweg von dem ausgesandten Lichtbündel 4 und der Lichtweg von dem Empfangslichtstrahl 9 auch in dieser Anordnung durch die Optikeinheit 11 nicht beeinträchtigt wird.

Beide Umlenkeinheiten 23.1 und 23.2 sind so demissioniert, dass sie dann, wenn sich die Optikeinheit 11 in der Parkposition befindet, diese an einer auf der Montageplatte 12 angebrachten Dichtfläche 25.1 und 25.2 aufliegen und somit vor einer möglichen Verschmutzung geschützt sind. Wie bereits oben erwähnt, hat sich über die Bewegung der Schieberplatte 16 um die Wegstrecke S1 der Abstand der Optikträgerplatte 17 um den Distanzbetrag D vergrößert, wodurch sich in gleichem Maße die Optikeinheit 11 rechtwinklig von der Montageplatte 12 entfernt hat. Dieses senkrechte Abheben der Optikeinheit 11, beziehungsweise der beiden Umlenkeinheiten 23.1 und 23.2 von den jeweiligen Dichtflächen 25.1 und 25.2 hat den Vorteil, dass an den Kontaktflächen der Umlenkeinheiten 23.1 und 23.2 mit den Dichtflächen 25.1 und 25.2 keine Reibung stattfindet und somit ein Verkratzen verhindert wird. Dies ist insbesondere dann von großem Nutzen, wenn, was in Figur 2 nicht im Einzelnen dargestellt wurde, die Umlenkeinheiten 23.1 und 23.2 an den zu den Dichtflächen 25.1, 25.2 hinweisenden Enden mit jeweils einer optischen Abdeckscheibe verschlossen sind.

Während in der Figur 2 die Anordnung nach der vollzogenen ersten Bewegungsstufe dargestellt wurde, zeigt Figur 3 den Zustand nach Abschluss der zweiten Bewegungsstufe. Dabei ist zu sehen, dass aufgrund weiterer von der Gewindespindel 14 durchgeführten Umdrehungen die Schieberplatte 16 um die Wegstrecke S2 gegenüber der Darstellung in Figur 1 parallel zur Montageplatte 12 verschoben ist. Da nach Ablauf der ersten Bewegungsstufe die Schieberplatte 16 im Bereich der Spindelmutter 15 an der Optikträgerplatte 17 anliegt, wird in dieser zweiten Bewegungsstufe die Optikträgerplatte 17 und damit auch die Optikeinheit 11 gegen die Federkraft 20 ebenfalls parallel zur Montageplatte 12 verschoben. Dadurch gelangt die Umlenkeinheit 23.1 in das aus dem Lichtaustrittsfenster 5 austretende Lichtbündel 4. Das Lichtbündel 4 wird von der Umlenkeinheit 23.1 in den Lichtleiter 24 eingelenkt und somit zur Umlenkeinheit 23.2 geführt. Nach der erneuten Umlenkung des Lichtbündels in der Umlenkeinheit 23.2 tritt es in Richtung des Empfangslichtstrahles 9 durch das Lichteintrittsfenster 8 hindurch und gelangt zur Lichtempfangseinheit 7. In dieser Situation wird sich bei einer eingetretenen Verschmutzung auf den zu dem Staubbereich 6 hinweisenden Grenzflächen von dem Lichtaustrittsfenster 5 und dem Lichteintrittsfenster 8 die an der Lichtempfangseinheit 7 ankommende Lichtmenge verringern. Daraus kann in einer, in den Figuren nicht dargestellten Steuer- und Auswerteeinheit die Höhe der Staubbelastung auf diesen Grenzflächen ermittelt werden.

Nach der Verschmutzungsmessung, die im Verhältnis zur eigentlichen Staubmesszeit nur eine sehr geringe Zeitspanne in Anspruch nimmt, wird die Optikeinheit 11 wieder, wie in Figur 1 dargestellt, in die Parkposition zurückgeführt. Dazu wird durch eine entgegengesetzte Umdrehung der Gewindespindel 14 die Schieberplatte 16 zurückgezogen. Die Optikträgerplatte 17 folgt aufgrund der durch die Feder 20 ausgeübten Kraft der Schieberplatte 16 bis zu der Stelle, an der die Optikträgerplatte 17 am Anschlag 21 anliegt. Mit der weiteren Umdrehung der Gewindespindel 14 in Umkehrrichtung wird die Schieberplatte 16 wieder zur Ausgangssituation zurück bewegt. Damit wird auch die Wirkung der keilförmig ansteigenden Distanzelemente 22.1 und 22.2 zurückgeführt und die Umlenkeinheiten 23.1 und 23.2 setzen dann wieder senkrecht auf die Dichtflächen 25.1, 2.5.2 auf.

### Bezugszeichenliste

- 1: Vorrichtung zur Staubmessung
- 2: Gehäuse
- 3: Lichtsender
- 4: Lichtbündel
- 5: Lichtaustrittsfenster
- 6: Staubbereich
- 7: Lichtempfangseinheit
- 8: Lichteintrittsfenster
- 9: Empfangslichtstrahl
- 10: Schiebemechanikeinheit
- 11 1: Optikeinheit
- 12: Montageplatte
- 13: Motor
- 14: Spindel
- 15: Spindelmutter
- 16: Schieberplatte
- 17: Optikträgerplatte
- 18: Druckfedern
- 19: Stempel
- 20: Feder
- 21: Anschlag
- 22.1, 22.2: keilförmig ansteigende Distanzelemente
- 23.1, 23.2: Umlenkeinheiten
- 24: Lichtleiter
- 25.1 , 25.2: Dichtflächen
- S1, S2: Wegstrecken
- D: Distanzbetrag

## Patentansprüche

1. Optische Vorrichtung (1) zur Staubmessung mit einem in einem Gehäuse (2) angeordneten Lichtsender (3), der ein Lichtbündel (4) aus dem Gehäuse (2) aussendet und mit wenigstens einer Lichtempfangseinheit (7) zur Erfassung von einem auf das Gehäuse (2) auftreffenden Empfangslichtstrahl (9), wobei das Gehäuse (2) durch wenigstens ein Lichtaustritts- (5) und Lichteintrittsfenster (8) gegenüber den Umgebungseinflüssen im Umfeld des Gehäuses (2) dicht abgeschlossen ist, wobei zur Verschmutzungsmessung der Fenster eine Optikeinheit (11) in den Strahlengang bringbar ist und wenigstens eine optische Komponente aufweist, die das aus dem Gehäuse (2) ausgesandte Lichtbündel (4) unmittelbar wieder der oder den Lichtempfangseinheiten (7) zuführt, **dadurch gekennzeichnet, dass** an der mit dem Lichtaustritts- (5) und Lichteintrittsfenster (8) ausgestatteten Außenseite des Gehäuses (2) eine zweistufige Schiebemechanikeinheit (10) vorhanden ist, die auf einer Montageplatte (12) aufgebaut ist und die die Optikeinheit (11) aus einer Parkposition, in der die Optikeinheit (11) auf einer Dichtfläche (25.1, 25.2) aufliegt, in eine erste Richtung senkrecht zur Montageplatte (12) abhebt und in eine zweite Richtung parallel zur Montageplatte (12) in den wirksamen optischen Querschnitt vor das Lichtaustritts- (5) und Lichteintrittsfenster (8) bewegt.

2. Optische Vorrichtung nach Anspruch 1, **dadurch gekennzeichnet, dass** die Schiebemechanikeinheit (10) von einer Steuer- und Auswerteeinheit in vorgegebenen zeitlichen Abständen kurzzeitig aktivierbar ist, so dass mittels des unmittelbar wieder der oder den Lichtempfangseinheiten zugeführte Licht die Steuer- und Auswerteeinheit in dieser Phase die Verschmutzung des wenigstens einen Lichtaustritts- (5) und Lichteintrittsfenster (8) erfassen kann.

3. Optische Vorrichtung nach Anspruch 1, **dadurch gekennzeichnet, dass** die Schiebemechanikeinheit (10) neben der Montageplatte (12) folgende Konstruktionselemente aufweist,
- eine parallel zur Montageplatte (12) angeordnete und in einer Richtung verschiebbar gelagerte Optikträgerplatte (17), bestückt mit der Optikeinheit (11) zur gerichteten Lichtstrahlumlenkung,
- eine zwischen der Montageplatte (12) und der Optikträgerplatte (17) angeordnete, motorisch in die zweite Richtung parallel zur Montageplatte verstellbare Schieberplatte (16),
- ein oder mehrere Führungselemente zur gerichteten Verschiebung der Schieberplatte (16) und der Optikträgerplatte (17) in Bezug auf die Montageplatte (12),
- eine oder mehrere Druckfedern (18) zum Andrücken der Schieberplatte (16) und der Optikträgerplatte (17) gegen die Montageplatte (12),
- eine Feder (20) zur spielfreien Positionierung der Optikträgerplatte (17) in deren Bewegungsrichtung,
- wenigstens ein auf der Schieberplatte (16) oder der Montageplatte (12) angeordnetes keilförmig ansteigendes Distanzelement (22.1) zur partiellen Veränderung des Abstandes zwischen der Optikträgerplatte (17) und der Montageplatte (12).

4. Optische Vorrichtung nach Anspruch 2, **dadurch gekennzeichnet, dass** zur motorischen Verstellung der Schieberplatte (16) eine von einem auf der Montageplatte (12) befestigten Motor (13) angetriebene Gewindespindel (14) in eine an der Schieberplatte (16) angebrachte Spindelmutter (15) eingreift und dass die Schieberplatte (16) ab einer vorgegebenen Position auch die Optikträgerplatte (17) parallel zur Schieberplatte (16) mitbewegt.

5. Optische Vorrichtung nach einem der vorhergehenden Ansprüche, **dadurch gekennzeichnet, dass** die Dichtflächen (25.1, 25.2) auf der Montagefläche (12) angebracht sind, und die die Optikeinheit (11) in der Parkposition kraftschlüssig auf den Dichtflächen (25.1, 25.2) aufliegt.

6. Optische Vorrichtung nach einem der vorhergehenden Ansprüche, **dadurch gekennzeichnet, dass** in der Optikeinheit (11) zur Lichtumlenkung wenigstens ein flexibler Lichtleiter (24) vorhanden ist.

7. Optische Vorrichtung nach einem der vorhergehenden Ansprüche, **dadurch gekennzeichnet, dass** die Optikeinheit (11) zur Lichtumlenkung einen Y-förmigen Lichtleiter aufweist, wobei das gemeinsame Ende des Lichtleiters auf das aus dem Gehäuse (2) austretende Lichtbündel (4) gerichtet ist und die beiden Einzelarme des Lichtleiters zu zwei Lichtempfangseinheiten hin gerichtet sind, wobei die erste Lichtempfangseinheit für den Betrieb während der Staubmessung vorgesehen ist und die zweite Lichtempfangseinheit zur Kalibrierung.

8. Optische Vorrichtung nach einem der vorhergehenden Ansprüche 1 bis 6, **dadurch gekennzeichnet, dass** die Optikeinheit (11) zur Lichtumlenkung zwei Lichtleiter aufweist, wobei erste Enden der Lichtleiter auf einen von aus dem Gehäuse (2) austretenden Lichtbündel beleuchteten Fleck gerichtet sind und die beiden anderen Enden der Lichtleiter zu den Lichtempfangseinheiten hin, wobei die erste Lichtempfangseinheit für den Betrieb während der Staubmessung vorgesehen ist und die zweite Lichtempfangseinheit zur Kalibrierung.

9. Optische Vorrichtung nach Anspruch 1, **dadurch gekennzeichnet, dass** die die Montageplatte (12) mit dem Gehäuse (2) lösbar verbunden ist.

10. Verfahren zur Staubmessung mit einer Vorrichtung nach einem der vorhergehenden Ansprüche, **dadurch gekennzeichnet, dass** eine Steuer- und Auswerteeinheit in vorgegebenen zeitlichen Abständen kurzzeitig von einer allgemeinen Staubmessung in eine Messung der Verschmutzung der optischen Grenzflächen an den Lichtaustritts- (5) und Lichteintrittsfenstern (8) umschaltet, wobei folgende Verfahrensschritte durchgeführt werden,
- in einer ersten Bewegungsstufe wird die sich in der Parkposition befindliche Optikeinheit (11), die auf der Dichtfläche (25.1, 25.2) aufliegt, motorisch von den die Optikeinheit (11) schützenden Dichtflächen (25.1, 25.2) in eine erste Richtung senkrecht abgehoben,
- in einer daran anschließenden zweiten Bewegungsstufe wird die Optikeinheit (11) motorisch vor die wirksamen optischen Querschnitte der Lichtaustritts- (5) und Lichteintrittsfenster (8) entlang einer zweiten Richtung parallel zu einer Montageplatte geschoben und über die Optikeinheit (11) das aus dem Gehäuse (2) ausgesandte Lichtbündel (4) direkt der oder den Lichtempfangseinheiten (7) zur Verschmutzungsmessung zugeführt.

## Claims

1. An optical apparatus (1) for dust measurement having a light transmitter (3) which is arranged in a housing (2) and which transmits a light beam (4) from the housing (2) and having at least one light receiver unit (7) for detecting a received light beam (9) incident onto the housing (2), wherein the housing (2) is sealingly closed by at least one light exit window (5) and one light entry window (8) with respect to the environmental influences in the environment of the housing (2), wherein an optical unit (11) can be brought into the beam path for the contamination measurement of the windows and has at least one optical component which supplies the light beam (4) transmitted from the housing (2) directly back to the light receiver unit or units (7), **characterised in that** a two-stage slide mechanism unit (10) is present at the outer side of the housing (2) equipped with the light exit window (5) and the light entry window (8), said two-stage slide mechanism unit being built on an assembly plate (12) and raising the optical unit (11) in a first direction perpendicular to the assembly plate (12) from a parked position in which the optical unit (11) lies on a sealing surface (25.1, 25.2) and moving it in a second direction parallel to the assembly plate (12) into the effective optical cross-section in front of the light exit window (5) and light entry window (8).

2. An optical apparatus in accordance with claim 1, **characterised in that** the slide mechanism unit (10) can be briefly activated at preset time intervals by a control and evaluation unit so that the control and evaluation unit can detect the contamination of the at least one light exit window (5) and light entry window (8) in this phase by means of the light supplied directly again to the light receiver or unit or units.

3. An optical apparatus in accordance with claim 1, **characterised in that** the slide mechanism unit (10) has the following construction elements in addition to the assembly plate (12),
- an optical carrier plate (17) arranged parallel to the assembly plate (12), displaceably supported in a direction and fitted with the optical unit (11) for the directed deflection of a light beam;
- a slider plate (16) arranged between the assembly plate (12) and the optical carrier plate (17) and adjustable by a motor in the second direction parallel to the assembly plate;
- one or a plurality of guide elements for the direct displacement of the slider plate (16) and of the optical carrier plate (17) with respect to the assembly plate (12);
- one or a plurality of compression springs (18) for pressing the slider plate (16) and the optical carrier plate (17) toward the assembly plate (12);
- a spring (20) for clearance-free positioning of the optical carrier plate (17) in its direction of movement; and
- at least one spacer element (22.1) rising in wedge shape which is arranged on the slider plate (16) or on the assembly plate (12) for the partial changing of the distance between the optical carrier plate (17) and the assembly plate (12).

4. An optical apparatus in accordance with claim 2, **characterised in that** a threaded spindle (14) driven by a motor (13) fastened to the assembly plate (12) engages into a spindle nut (15) attached to the slider plate (16) for the motor-driven adjustment of the slider plate (16); and **in that** the slider plate (16) also moves the optical carrier plate (17) parallel to the slider plate (16) from a preset position onward.

5. An optical apparatus in accordance with any one of the preceding claims, **characterised in that** the sealing surfaces (25.1, 25.2) are attached to the assembly plate (12) and the optical unit (11) lies on the sealing surfaces (25.1, 25.2) in force-transmitting manner in the parked position.

6. An optical apparatus in accordance with any one of the preceding claims, **characterised in that** at least one flexible light guide (24) is present in the optical unit (11) for the deflection of light.

7. An optical apparatus in accordance with any one of the preceding claims, **characterised in that** the optical unit (11) has a Y-shaped light guide for the deflection of light, with the common end of the light guide being directed to the light beam (4) exiting the housing (2) and the two individual arms of the light guide being directed toward two light receiver units, with the first light receiver unit being provided for operation during the dust measurement and the second light receiver unit being provided for calibration.

8. An optical apparatus in accordance with any one of the claims 1 to 6, **characterised in that** the optical unit (11) has two light guides for the deflection of light, with first ends of the light guides being directed to a spot illuminated by light beans exiting the housing (2) and the two other ends of the light guide being directed toward the light receiver units, with the first light receiver unit being provided for operation during the dust measurement and the second light receiver unit being provided for calibration.

9. An optical apparatus in accordance with claim 1, **characterised in that** the assembly plate (12) is releasably connected to the housing (2).

10. A method for dust measurement having an apparatus in accordance with any one of the preceding claims, **characterised in that** a control and evaluation unit briefly switches over from a general dust measurement into a measurement of the contamination of the optical interfaces at the light exit window (5) and the light entry window (8) at preset time intervals, with the following method steps being carried out,
- in a first movement stage, the optical unit (11) located in the parked position and lying on the sealing surface (25.1, 25.2) is raised perpendicular in a first direction from the sealing surfaces (25.1, 25.2) protecting the optical unit (11) by a motor; and
- in a second movement stage following it, the optical unit (11) is pushed by a motor along a second direction parallel to an assembly plate in front of the effective optical cross-sections of the light exit window (5) and light entry window (8) and supplies the light beam (4) transmitted from the housing (2) via the optical unit (11) directly to the light receiver unit or units (7) for the contamination measurement.

## Revendications

1. Dispositif optique (1) pour la mesure de poussière, comprenant un émetteur de lumière (3) agencé dans un boîtier (2), qui émet un faisceau de lumière (4) hors du boîtier (2), et au moins une unité de réception de lumière (7) pour recevoir un rayon lumineux reçu (9) qui tombe sur le boîtier (2), dans lequel le boîtier (2) est fermé de façon étanche par au moins une fenêtre de sortie de lumière (5) et une fenêtre d'entrée de lumière (8), vis-à-vis des influences environnantes dans les environs du boîtier (2), dans lequel, pour la mesure d'encrassement des fenêtres, une unité optique (11) est susceptible d'être amenée dans le trajet du rayon et comprend au moins une composante optique qui ramène immédiatement le faisceau de lumière (4) émis hors du boîtier (2) vers la ou les unités de réception de lumière (7),
**caractérisé en ce que**, sur la face extérieure du boîtier (2) pourvue de la fenêtre de sortie de lumière (5) et de la fenêtre d'entrée de lumière (8), il est prévu une unité mécanique à poussoir (10) à deux étages qui est montée sur une plaque de montage (12) et qui soulève l'unité optique (11) depuis une position de stationnement, dans laquelle l'unité optique (11) repose sur une surface d'étanchéité (25.1, 25.2), dans une première direction perpendiculaire à la plaque de montage (12) et la déplace dans une seconde direction parallèlement à la plaque de montage (12) pour entrer dans la section optique efficace devant la fenêtre de sortie de lumière (5) et la fenêtre d'entrée de lumière (8).

2. Dispositif optique selon la revendication 1, **caractérisé en ce que** l'unité mécanique à poussoir (10) est susceptible d'être activée, par une unité de commande et d'évaluation, à des intervalles temporels prédéterminés, de sorte que, au moyen de la lumière ramenée immédiatement vers la ou les unités de réception de lumière, l'unité de commande d'évaluation peut détecter dans cette phase l'encrassement de ladite au moins une fenêtre de sortie de lumière (5) ou fenêtre d'entrée de lumière (8).

3. Dispositif optique selon la revendication 1, **caractérisé en ce que** l'unité mécanique à poussoir (10) comprend, outre la plaque de montage (12), les éléments structurels suivants :
- une plaque porte-optique (17) agencée parallèlement à la plaque de montage (12) et montée en translation dans une direction, équipée de l'unité optique (11) destinée à une déviation ciblée du rayon lumineux,
- une plaque-tiroir (16) agencée entre la plaque de montage (12) et la plaque porte-optique (17), susceptible d'être déplacée de façon motorisée dans la seconde direction parallèlement à la plaque de montage,
- un ou plusieurs éléments de guidage destinés à une translation orientée de la plaque-tiroir (16) et de la plaque porte-optique (17) par référence à la plaque de montage (12),
- un ou plusieurs ressorts de compression (18) pour presser la plaque-tiroir (16) et la plaque porte-optique (17) contre la plaque de montage (12),
- un ressort (20) pour le positionnement sans jeu de la plaque porte-optique (17) dans sa direction de déplacement,
- au moins un élément d'écartement (22.1) agencé sur la plaque-tiroir (16) ou sur la plaque de montage (12), qui monte en forme de coin et qui est destiné à modifier partiellement la distance entre la plaque porte-optique (17) et la plaque de montage (12).

4. Dispositif optique selon la revendication 2, **caractérisé en ce que**, pour le déplacement motorisé de la plaque-tiroir (16), une broche filetée (14) entraînée par un moteur (13) fixé sur la plaque de montage (12) s'engage dans un écrou à broche (15) monté sur la plaque-tiroir (16), et **en ce que**, à partir d'une position prédéterminée, la plaque-tiroir (16) entraîne également la plaque porte-optique (17) parallèlement à la plaque-tiroir (16).

5. Dispositif optique selon l'une des revendications précédentes, **caractérisé en ce que** les surfaces d'étanchéité (25.1, 25.2) sont ménagées sur la surface de montage (12), et l'unité optique (11) repose, en position de stationnement, à coopération de forces sur les surfaces d'étanchéité (25.1, 25.2).

6. Dispositif optique selon l'une des revendications précédentes, **caractérisée en ce qu'**il est prévu au moins un guide de lumière flexible (24) dans l'unité optique (11) pour la déviation de la lumière.

7. Dispositif optique selon l'une des revendications précédentes, **caractérisé en ce que** l'unité optique (11) pour la déviation de la lumière comprend un guide de lumière en forme de Y, tel que l'extrémité commune du guide de lumière est orientée vers le faisceau lumineux (4) sortant du boîtier (2), et les deux bras du guide de lumière sont dirigés vers deux unités de réception de lumière, dans lesquelles la première unité de réception de lumière est prévue pour le fonctionnement pendant la mesure de poussière et la seconde unité de réception de lumière est prévue pour le calibrage.

8. Dispositif optique selon l'une des revendications 1 à 6, **caractérisé en ce que** l'unité optique (11) pour la déviation de la lumière comprend deux guides de lumière, tels que des premières extrémités des guides de lumière sont dirigées vers une tache éclairée par le faisceau lumineux sortant du boîtier (2), et les deux autres extrémités des guides de lumière sont dirigées vers les unités de réception de lumière, dans lesquelles la première unité de réception de lumière est prévue pour le fonctionnement pendant la mesure de poussière et la seconde unité de réception de lumière est prévue pour le calibrage.

9. Dispositif optique selon la revendication 1, **caractérisé en ce que** la plaque de montage (12) est reliée de façon détachable au boîtier (2).

10. Procédé pour la mesure de poussière avec un dispositif selon l'une des revendications précédentes, **caractérisé en ce qu'**une unité de commande et d'évaluation effectue à intervalles temporels prédéterminés brièvement une commutation depuis une mesure générale de poussière vers une mesure de l'encrassement des surfaces limites optiques au niveau des fenêtres de sortie de lumière (5) et des fenêtres d'entrée de lumière (8), en exécutant les étapes de procédé suivantes :
- dans une première étape de déplacement, l'unité optique (11) qui se trouve dans la position de stationnement en reposant sur la surface d'étanchéité (25.1, 25.2), est soulevée par un moteur perpendiculairement dans une première direction depuis les surfaces d'étanchéité (25.1, 25.2) qui protègent l'unité optique (11),
- dans une seconde étape de déplacement qui lui fait suite, l'unité optique (11) est poussée par un moteur devant les sections optiques efficaces des fenêtres de sortie de lumière (5) et d'entrée de lumière (8) le long d'une seconde direction parallèlement à une plaque de montage, et le faisceau lumineux (4) émis hors du boîtier (2) est amené via l'unité optique (11) directement à l'unité ou aux unités de réception de lumière (7) pour la mesure d'encrassement.
